# EUROPEAN PATENT APPLICATION

(11) **EP 4 636 098 A1**
(43) Date of publication of application: **22.10.2025**
(21) Application number: 23925334.7
(22) Date of filing: 23.03.2023
(51) Int. Cl.: C21B 5/00

(54) **FURNACE HEAT PREDICTION DATA CREATION DEVICE AND METHOD THEREFOR, AND FURNACE HEAT PREDICTION DEVICE AND METHOD THEREFOR**

(30) Priority: 02.03.2023 JP 2023031856
(71) Applicant: KABUSHIKI KAISHA KOBE SEIKO SHO (KOBE STEEL, LTD.), Hyogo 651-8585 (JP)
(72) Inventor: KAMO, Kazufumi, Hyogo 651-2271 (JP); NARAZAKI, Hiroshi, Hyogo 651-2271 (JP); OTANI, Takuya, Hyogo 651-2271 (JP); SAKODA, Naokazu, Hyogo 651-2271 (JP); KUWANA, Kota, Hyogo 651-2271 (JP); KASAI, Akito, Hyogo 675-0137 (JP)
(74) Representative: Müller-Boré & Partner Patentanwälte PartG mbB
(86) International application number: PCT/JP2023/011531
(87) International publication number: WO 2024/180780

(57) **Abstract**

Furnace heat prediction data generation apparatus and method according to the present invention measure a temperature of pig iron tapped from a tap hole of a blast furnace in contact with the pig iron at a first time interval, measure a temperature of the pig iron in non-contact with the pig iron at a second time interval shorter than the first time interval, and generate furnace heat prediction data from temperature data of the pig iron on the basis of first temperature data time-serially including a plurality of first temperatures measured at the first time interval and second temperature data time-serially including a plurality of second temperatures measured at the second time interval. Furnace heat prediction system and method according to the present invention include the furnace heat prediction data generation apparatus and method, respectively.

## Description

### Technical Field

The present invention relates to a furnace heat prediction data generation apparatus for generating furnace heat prediction data used to predict furnace heat in a blast furnace and a method for generating the furnace heat prediction data, and a furnace heat prediction system including the above-mentioned apparatus and a furnace heat prediction method including the above-mentioned method.

### Background Art

A temperature of pig iron in a blast furnace, which typically represents furnace heat in the blast furnace, is important to maintain a quality of the pig iron, and is generally controlled within a certain range set in advance by manipulating (changing, regulating, controlling) operation conditions such as temperature, humidity, and amount of blown air, an injection amount of pulverized coal, and a coke ratio. However, in a blast furnace in a large plant, the temperature of the pig iron will not change immediately after the operation condition is altered, but the change in the pig iron temperature is seen after the lapse of several hours (two hours, and so on, for example) or more. It is thus difficult to perform the so-called feedback control. Prediction of a pig iron temperature after the lapse of several hours is demanded to stabilize the pig iron temperature. For example, Patent Literature 1 shows a proposal.

A furnace heat prediction system disclosed in Patent Literature 1 is a system that predicts furnace heat, and includes: a furnace heat model generation part that sequentially generates a furnace heat model to calculate a furnace heat variation amount on the basis of past actual data from a predetermined time to a certain past time; a furnace heat variation amount processing part that calculates a furnace heat variation amount after the lapse of a given time period from the predetermined time using the furnace heat model generated by the furnace heat model generation part, wherein the furnace heat model is expressed by two parameters, i.e., a time lag and a constant multiple gain.

Although the furnace heat prediction system disclosed in Patent Literature 1 can predict furnace heat at an accuracy higher than the conventional technology raised in Patent Literature 1, the system requires the past actual data from the predetermined time to the certain past time for the prediction. The temperature of the pig iron in the blast furnace, which typically represents the furnace heat in the blast furnace, is generally measured by a contact-type thermocouple. However, the thermocouple has characteristics which cause intermittent measurement at an interval of ten and a few minutes or tens of minutes. This measurement can hardly capture a relatively abrupt temperature change, leaving thus room for improvement.

### Citation List

### Patent Literature

Patent Literature 1: Japanese Unexamined Patent Publication No. 2021-130860

### Summary of Invention

The present invention has been made in view of the circumstances described above, and an object thereof is to provide a furnace heat prediction data generation apparatus that can generate furnace heat prediction data to more accurately predict furnace heat and a method for generating the furnace heat prediction data, a furnace heat prediction system including the above-mentioned apparatus, and a furnace heat prediction method including the above-mentioned method.

A furnace heat prediction data generation apparatus and a furnace heat prediction data generation method according to the present invention measure a temperature of pig iron tapped from a tap hole of a blast furnace in contact with the pig iron at a first time interval, measure a temperature of the pig iron in non-contact with the pig iron at a second time interval shorter than the first time interval, and generate furnace heat prediction data from temperature data of the pig iron on the basis of first temperature data time-serially including a plurality of first temperatures measured at the first time interval and second temperature data time-serially including a plurality of second temperatures measured at the second time interval. A furnace heat prediction system and a furnace heat prediction method according to the present invention include the furnace heat prediction data generation apparatus and the furnace heat prediction data generation method, respectively.

The foregoing, and the object, features, and advantages of the present invention will be further understood by the following detailed description and the accompanying drawings.

### Brief Description of Drawings

FIG. 1 is a block diagram showing a configuration of a furnace heat prediction system including a furnace heat prediction data generation apparatus according to an embodiment.
FIG. 2 is a schematic diagram showing measurement of a temperature of pig iron by a first temperature measurement part and a second temperature measurement part.
FIGS. 3 are graphs showing a second combination manner.
FIG. 4 is a flowchart showing an operation of the furnace heat prediction system including the furnace heat prediction data generation apparatus.

### Description of Embodiments

Hereinafter, one or more embodiments of the present invention will be described with reference to the accompanying drawings. However, the present invention should not be limited to the disclosed embodiments. Elements denoted by the same reference numerals in the drawings have the same configuration and repeated descriptions will be appropriately omitted. In the present specification, an element is denoted by a reference numeral having no subscript when being referred to collectively, while an element is denoted by a reference numeral having a subscript when being referred to individually.

A furnace heat prediction system according to an embodiment includes a furnace heat prediction data generation apparatus that generates furnace heat prediction data used to predict furnace heat in a blast furnace, and a prediction part that predicts furnace heat in the blast furnace using the furnace heat prediction data generated by the furnace heat prediction data generation apparatus. The furnace heat prediction data generation apparatus includes a first temperature measurement part that measures a temperature of pig iron tapped from a tap hole of the blast furnace in contact with the pig iron at a first time interval, a second temperature measurement part that measures a temperature of the pig iron in non-contact with the pig iron at a second time interval shorter than the first time interval, and a data generation part that generates furnace heat prediction data from temperature data of the pig iron on the basis of first temperature data time-serially including a plurality of first temperatures measured by the first temperature measurement part at the first time interval and second temperature data time-serially including a plurality of second temperatures measured by the second temperature measurement part at the second time interval. Hereinafter, the furnace heat prediction system, the furnace heat prediction data generation apparatus, and a furnace heat prediction method and a furnace heat prediction data generation method respectively performed therewith are more specifically described with reference to a furnace heat prediction system including a furnace heat prediction data generation apparatus as an example.

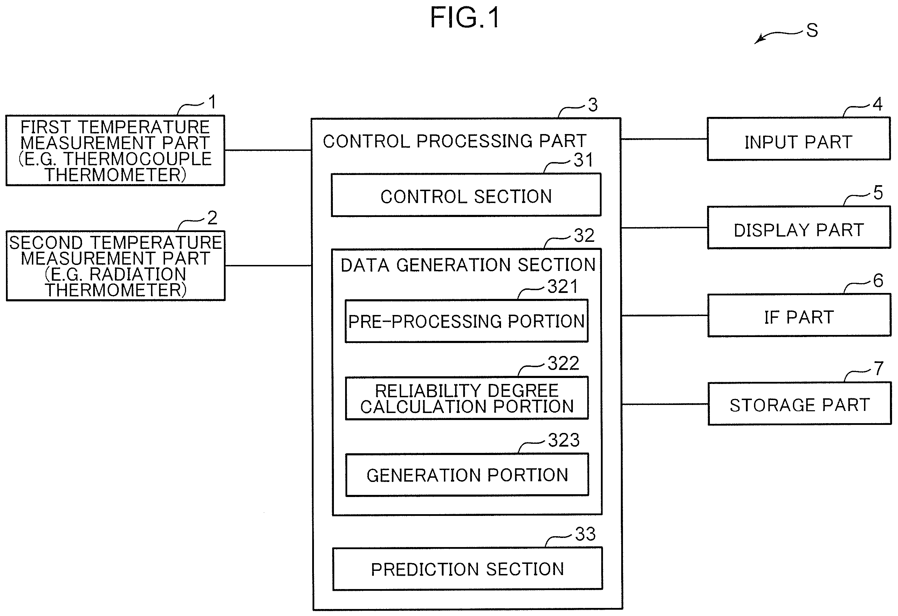

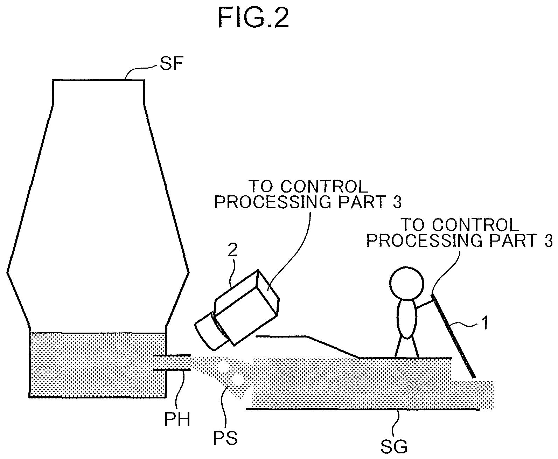

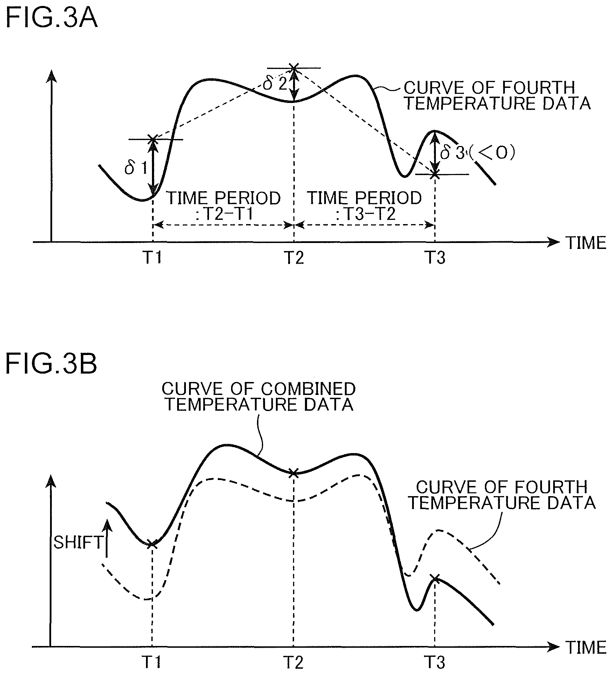

FIG. 1 is the block diagram showing the configuration of the furnace heat prediction system including the furnace heat prediction data generation apparatus according to the embodiment. FIG. 2 is the schematic diagram showing measurement of a temperature of pig iron by the first temperature measurement part and the second temperature measurement part. FIGS. 3 are the graphs showing the second combination manner. FIG. 3A shows before a combination, and FIG. 3B shows after the combination. The horizontal axes in FIG. 3A and FIG. 3B represent time, whereas the vertical axes represent temperature.

The furnace heat prediction system S including the furnace heat prediction data generation apparatus according to the embodiment includes, for example, a first temperature measurement part 1, a second temperature measurement part 2, a control processing part 3, an input part 4, a display part 5, an interface part (IF part) 6, and a storage part 7 as shown in FIG. 1 and FIG. 2.

The first temperature measurement part 1 is a device that is in a wired or wireless connection with the control processing part 3 and measures a temperature of pig iron tapped from a tap hole of a blast furnace in contact with the pig iron at a first time interval under a control by the control processing part 3. The first temperature measurement part 1 outputs to the control processing part 3 a temperature (first temperature) measured at the first time interval, which is either periodic or sporadic. The control processing part 3 stores in the storage part 7 time detected by a timer section (unillustrated) functionally provided in the control processing part 3 as time at a measurement moment in association with the measurement moment, for example. The first temperature data time-serially including a plurality of first temperatures measured by the first temperature measurement part 1 at the first time interval is thus stored in the storage part 7. For example, as shown in FIG. 2, the first temperature measurement part 1 is an immersion-type thermocouple thermometer that measures a temperature of pig iron in a tapped iron-slag flow PS from a tap hole PH formed in the blast furnace SF to an iron tapping runner SG in contact with, more specifically by immersion in, the pig iron in the iron tapping runner SG. Generally, in the immersion-type thermocouple thermometer, a thermocouple probe is manually immersed according to need in the pig iron, and the measurement is performed. Thus, the thermometer can measure a temperature of the pig iron at a relatively high accuracy. However, due to a poor durability of the thermocouple probe, the thermometer can hardly perform a continuous measurement but can merely perform an intermittent measurement at an interval of ten and a few minutes or tens of minutes.

The second temperature measurement part 2 is a device that is in a wired or wireless connection with the control processing part 3 and measures a temperature of the pig iron in non-contact with the pig iron at a second time interval shorter than the first time interval under the control by the control processing part 3. The second temperature measurement part 2 outputs to the control processing part 3 a temperature (second temperature) measured at the second time interval. The control processing part 3 stores in the storage part 7 time detected by the timer section (unillustrated) as time at a measurement moment in association with the measurement moment, for example. The second temperature data time-serially including a plurality of second temperatures measured by the second temperature measurement part 2 at the second time interval is thus stored in the storage part 7. For example, as shown in FIG. 2, the second temperature measurement part 2 is a radiation thermometer suitably provided to measure a temperature of the pig iron in the tapped iron-slag flow PS from the tap hole PH of the blast furnace SF to the iron tapping runner SG in non-contact with the pig iron. The radiation thermometer is a device that captures an image of the pig iron by an imaging element to thereby measure a radiance of the pig iron and convert the radiance into a temperature. The radiation thermometer, which can capture an image of pig iron at intervals of a few seconds, for example, can perform a continuous measurement. A device that performs a non-contact measurement of a temperature of pig iron in a tapped iron-slag flow PS is publicly known, and is disclosed, for example, in Japanese Patent No. 6776180, Japanese Patent No. 7189844, and Japanese Unexamined Patent Publication No. 2020-204475. In a case that a time interval of such continuous measurement is known, it is not necessary to associate each measurement with a measurement moment. A measurement start time (or a measurement end time) may be associated with second measurement data. In this embodiment, the second temperature measurement part 2 captures an image of the pig iron at a predetermined frame rate (frames/minute) to obtain a temperature of the pig iron, and calculates a representative value such as a moving average, a median, and a mode every minute, and outputs a temperature of the pig iron to the control processing part 3 at the second time interval or every minute together with an abnormality flag. The abnormality flag is a flag showing whether the temperature of the pig iron obtained every minute is normal or abnormal. For example, when a luminance fluctuation per unit time increases due to penetration of steam or the like between the second temperature measurement part 2 and the pig iron, and consequently, a luminance variance of the pig iron per unit time is calculated to be greater than a preset threshold (determination threshold), the second temperature measurement part 2 determines that the obtained temperature of the pig iron is abnormal, and outputs an abnormality flag "-1" representing the abnormality. On the other hand, when the luminance variance is equal to or greater than the determination threshold, the second temperature measurement part 2 determines that the obtained temperature of the pig iron is normal, and outputs an abnormality flag "+1" representing the normality. The output of the abnormality flag representing the normality may be omitted (thus, only the measured temperature may be output.)

The input part 4 is a device that is connected to the control processing part 3 and is adapted to input to the furnace heat prediction system S various commands such as a command instructing a start of generation of furnace heat prediction data and a command instructing prediction of furnace heat after a lapse of a given time period, and various data necessary to operate the furnace heat prediction system S including a furnace heat prediction data generation apparatus such as a range of past actual data for generation of the furnace heat prediction data and a predetermined time when furnace heat is predicted. The input part 4 includes, for example, a keyboard, a mouse, and a plurality of input switches allotted with predetermined functions. The display part 5 is a device that is connected to the control processing part 3 and displays the command input from the input part 4, the generated furnace heat prediction data, a prediction result of furnace heat, and the like under the control by the control processing part 3. The display part 5 includes, for example, a CRT display device, a liquid crystal display device, and an organic EL display device.

The input part 4 and the display part 5 may be constituted in a touch panel. In the configuration of the touch panel, the input part 4 includes, for example, a positional input device that detects an operational input position in resistive or capacitive manner. In the touch panel, the positional input device is provided on a display screen of a display device. One or more inputtable candidate input contents are displayed on the display device. When a user touches a display position displayed with a desired input content, the positional input device detects the touched position. The display content displayed at the detected position is input to the furnace heat prediction system S as an operational input content of the user. The touch panel allows a user to intuitively understand an input operation, and thus ensures provision of a furnace heat prediction system S which can be easily handled by a user.

The IF part 6 is a circuit that is connected to the control processing part 3 and is adapted to input and output data to and from an external device under the control by the control processing part 3, and includes, for example, an interface circuit of RS-232C which is a serial communication way, an interface circuit by use of the Bluetooth (registered trademark) standard, an interface circuit for infrared communications such as IrDA (Infrared Data Association) Standard, and an interface circuit by use of USB (Universal Serial Bus) standard. Alternatively, the IF part 6 may include a circuit that communicates with an external device, and may include, for example, a data communication card, or a communication interface circuit in conformity with IEEE 802. 11 standard.

The storage part 7 is a circuit that is connected to the control processing part 3 and stores various predetermined programs and various kinds of predetermined data under the control by the control processing part 3. The various predetermined programs include, for example, a control processing program. The control processing program includes a control program, a data generation program and a prediction program. The data generation program includes a pre-processing program, a reliability calculation program, and a generation program. The control program is a program for controlling the parts 1, 2, and 4 to 7 of the furnace heat prediction system S according to functions of the respective parts. The data generation program is a program for generating furnace heat prediction data from temperature data of the pig iron on the basis of first temperature data time-serially including a plurality of first temperatures measured by the first temperature measurement part 1 at the first time interval and second temperature data time-serially including a plurality of second temperatures measured by the second temperature measurement part 2 at the second time interval. The prediction program is a program for predicting furnace heat in the blast furnace using the furnace heat prediction data generated by the data generation program for the furnace heat prediction data generation apparatus. The pre-processing program is a program for performing a predetermined pre-processing including compensation for missing data, equalization (synchronization) between a data interval in the first temperature data and a data interval in the second temperature data. The reliability degree calculation program is a program for calculating a reliability degree indicative of a level of reliability of the second temperature data. The generation program is a program for generating the furnace heat prediction data in such a manner that: when the reliability degree calculated by a reliability degree calculation section is lower than a predetermined threshold, the first temperature data is the furnace heat prediction data; and when the reliability degree calculated by the reliability degree calculation section is higher than the threshold, any one of the first to the third generation manners is selected. The various kinds of predetermined data include data such as first temperature data and second temperature data in past records that are necessary for the execution of each of the programs. The storage part 7 includes, for example, a read only memory (ROM) that is a nonvolatile storage element, an electrically erasable programmable read only memory (EEPROM) that is a rewritable nonvolatile storage element, or the like. The storage part 7 includes a random access memory (RAM) serving as a so-called working memory of the control processing part 3 that stores data and the like generated in execution of the predetermined programs. The storage part 7 may include a hard disk device that stores a large capacity.

The control processing part 3 is a circuit that controls the parts 1, 2, and 3 to 7 of the furnace heat prediction system S according to functions of the respective parts to thereby generate furnace heat prediction data and predict furnace heat in a blast furnace using the generated furnace heat prediction data. The control processing part 3 includes, for example, a CPU (Central Processing Unit) and a peripheral circuitry thereof. Upon execution of the control processing program, the control processing part 3 functionally includes a control section 31, a data generation section 32, and a prediction section 33, and the data generation section 32 functionally includes a pre-processing portion 321, a reliability degree calculation portion 322, and a generation portion 323.

The control section 31 administers the entire control of the furnace heat prediction system S by controlling the parts 1, 2, and 3 to 7 of the furnace heat prediction system S according to functions of the respective parts.

The data generation section 32 generates furnace heat prediction data from temperature data of the pig iron on the basis of first temperature data time-serially including a plurality of first temperatures measured by the first temperature measurement part 1 at the first time interval and second temperature data time-serially including a plurality of second temperatures measured by the second temperature measurement part 2 at the second time interval.

More specifically, the data generation section 32 generates the furnace heat prediction data in any one of: a first generation manner in which the second temperature data is the furnace heat prediction data; a second generation manner in which a result of combination of the first temperature data and the second temperature data is the furnace heat prediction data; and a third generation manner in which the first temperature data is the furnace heat prediction data. Preferably, the data generation section 32 calculates, for example, a discrepancy degree indicative of a level of discrepancy in the second temperature data from the first temperature data, and selects any one of the first to the third generation manners on the basis of the calculated discrepancy degree to thereby generate the furnace heat prediction data. The data generation section 32 calculates a reliability degree indicative of a level of reliability of the second temperature data, and generates the furnace heat prediction data in such a manner that: when the calculated reliability degree is lower than a predetermined threshold, the first temperature data is the furnace heat prediction data; and when the reliability degree calculated by the reliability degree calculation section is higher than the threshold, any one of the first to the third generation manners is selected. Preferably, the data generation section 32 may calculate a validity degree indicative of a level of validity of the second temperature measured by the second temperature measurement part 2 as the reliability degree. Preferably, for example, the data generation section 32 combines the first temperature data and the second temperature data in accordance with a linear polynomial including the first temperature and the second temperature. Alternatively, preferably, for example, the data generation section 32 combines the first temperature data and the second temperature data by shifting the second temperature data so as to agree with the first temperature. The data generation section 32 generates first candidate furnace heat prediction data that is furnace heat prediction data generated in any one of the first to the third generation manners, and further generates second candidate furnace heat prediction data on the basis of the first temperature data and the second temperature data. Preferably, for example, when the first candidate furnace heat prediction data is generated in the first generation manner, the data generation section 32 generates second candidate furnace heat prediction data in the second generation manner. Preferably, for example, when the first candidate furnace heat prediction data is generated in the second generation manner, the data generation section 32 generates second candidate furnace heat prediction data in the first generation manner. Preferably, for example, when the data generation section 32 generates first candidate furnace heat prediction data in the third generation manner, first temperature data after the lapse of a given time period from a start of the tapping is the first candidate furnace heat prediction data, and the latest first temperature in the first temperature data is the second candidate furnace heat prediction data.

More specifically, the data generation section 32 generates furnace heat prediction data by the pre-processing portion 321, the reliability degree calculation portion 322, and the generation portion 323 in the following manner.

The pre-processing portion 321 performs predetermined pre-processing such as the compensation for missing data, the equalization (synchronization) between a data interval in the first temperature data and a data interval in the second temperature data.

More specifically, first, in order to change the first temperature data including a plurality of first temperatures measured at the first time interval periodically or sporadically to data at a constant third time interval, the pre-processing portion 321 plots the first temperatures on a coordinate space where the horizontal axis represents measurement time (measurement moment) and the vertical axis represents temperature. Thus, a graph (first graph) representing temperatures over measurement time is generated. Then, the pre-processing portion 321 extracts, from the generated first graph, temperatures from a time of prediction (a start time such as the current time [present moment] and a desired time) to the past at the third time interval. Thus, third temperature data including temperatures (third temperatures) at the third time interval is generated. Since a temperature of the iron tapping runner SG before the tapping is low, a temperature of the pig iron flowing in the iron tapping runner SG immediately after the tapping is lower than a temperature of the pig iron at the tapping from the tap hole PH. Therefore, the third temperature data may preferably include a plurality of third temperatures after the lapse of a given time period TS (e.g., one hour or two hours) from a tapping start time. In order to change the second temperature data including a plurality of second temperatures measured at the second time interval to data at the third time interval, the pre-processing portion 321 extracts, for example, a central tendency such as a moving average, a median, and a mode from the start time to the past at the third time interval. Fourth temperature data including a plurality of temperatures (fourth temperatures) at the third time interval is thus generated. The third time interval is longer than the second time interval.

Since the second temperature data includes an abnormal temperature allotted with the abnormality flag "-1", this abnormal second temperature having the abnormality flag "-1" is removed and a new temperature is generated as the second temperature in the second temperature data by interpolation. For example, the interpolation includes a linear interpolation which uses a plurality of normal second temperatures for a certain time range including the abnormal second temperature having the abnormality flag "-1". Alternatively, for example, the interpolation includes a manner of calculating a substitute temperature for the abnormal second temperature by subtracting an average of a plurality of first temperatures from a first temperature corresponding to a measurement moment of the abnormal second temperature, and adding thereto an average of the normal second temperatures in the certain time range including the abnormal second temperature having the abnormality flag "-1", and further smoothing the normal second temperatures and the substitute temperature. A temperature which is obtained by the smoothing and corresponds to the measurement moment of the abnormal second temperature is the second temperature obtained by the interpolation. Alternatively, for example, the interpolation includes another manner of plotting the normal second temperatures included in the second temperature data on a coordinate space where the horizontal axis represents measurement moment (measurement time) and the vertical axis represents temperature to thereby generate a graph (second graph) representing temperatures over measurement moment. The fourth temperature data is generated by extracting temperatures from the generated second graph at the third time interval from the start time to the past.

Accordingly, the pre-processing portion 321 generates the third temperature data based on the first temperature data and the fourth temperature data based on the second temperature data. The third temperature data and the fourth temperature data are synchronized with each other at the third time interval from the start time to the past.

The reliability degree calculation portion 322 calculates a reliability degree indicative of a level of reliability of the second temperature data. More specifically, the reliability degree calculation portion 322 calculates a validity degree indicative of a level of validity of the second temperature measured by the second temperature measurement part as the reliability degree. Further specifically, the reliability degree calculation portion 322 calculates a ratio of the number of pieces of data of the normal second temperatures to the number of pieces of data of the second temperature data as the validity degree ((the validity degree) = (the number of pieces of data of the normal second temperatures) / (the number of pieces of data of the second temperature data), where 0 ≤ (the validity degree) ≤ 1). The validity degree may be calculated by subtracting a ratio of the number of pieces of data of the abnormal second temperatures to the number of pieces of data of the second temperature data from 1 ((the validity degree) = 1 - (the number of pieces of data of the abnormal second temperatures) / (the number of pieces of data of the second temperature data)).

In the above description, the validity degree is expressed by a ratio of the number of pieces of data of the normal second temperatures to the number of pieces of data of the second temperature data. However, the validity degree may be calculated on the basis of whether or not the second temperature data includes a predetermined number (the first number, for example, 1/6 or 1/5 of the total number) of consecutive second temperatures having the abnormality flag "-1". When the second temperature data includes the consecutive second temperatures having the abnormality flag "-1", the second temperature data is determined to have no validity degree (= 0). When the second temperature data does not include the consecutive second temperatures having the abnormality flag "-1", the second temperature data is determined to have the validity degree (= 1). Alternatively, the validity degree may be calculated on the basis of whether or not the second temperature data includes a certain number (the second number, for example, 1/12 or 1/10 of the total number) of consecutive second temperatures having the abnormality flag "-1" from the start time to the past. When the second temperature data includes the consecutive second temperatures having the abnormality flag "-1", the second temperature data is determined to have no validity degree (= 0). When the second temperature data does not include the consecutive second temperatures having the abnormality flag "-1", the second temperature data is determined to have the validity degree (= 1).

The generation portion 323 generates the furnace heat prediction data in such a manner that: when the reliability degree, i.e., the validity degree in this embodiment, calculated by the reliability degree calculation portion 322 is lower than a predetermined threshold (validity determination threshold), the first temperature data is the furnace heat prediction data; and when the reliability degree (the validity degree) calculated by the reliability degree calculation portion 322 is higher than the threshold (the validity determination threshold), any one of the first to the third generation manners is selected. In this embodiment, as described above, the third temperature data based on the first temperature data is generated, the fourth temperature data based on the second temperature data is generated, and further, in this embodiment, the first candidate furnace heat prediction data and the second candidate furnace heat prediction data are generated. Thus, more specifically, the furnace heat prediction data is generated as follows.

First, the generation portion 323 determines whether the validity degree calculated by the reliability degree calculation portion 322 is equal to or higher than the validity determination threshold. The validity determination threshold is properly set in advance.

In the determination, when the validity degree calculated by the reliability degree calculation portion 322 is not equal to or higher than the validity determination threshold (i.e., when the validity degree calculated by the reliability degree calculation portion 322 is lower than the validity determination threshold), the generation portion 323 determines the third temperature data based on the first temperature data to be the furnace heat prediction data. More specifically, the generation portion 323 determines third temperature data (third temperature data after the lapse of a given time period) including a plurality of third temperatures after the lapse of the given time period TS from the tapping start time to be the first candidate furnace heat prediction data, and determines the latest first temperature in the first temperature data, or the latest third temperature in the third temperature data in this embodiment, to be the second candidate furnace heat prediction data. In other words, in this case, the second candidate furnace heat prediction temperature data is data (third temperature data of the latest temperature) including the latest third temperatures.

In the determination, when the validity degree calculated by the reliability degree calculation portion 322 is equal to or higher than the validity determination threshold, the generation portion 323 generates the furnace heat prediction data in any one of: a first generation manner in which the second temperature data is the furnace heat prediction data; a second generation manner in which a result of combination of the first temperature data and the second temperature data is the furnace heat prediction data; and a third generation manner in which the first temperature data is the furnace heat prediction data. In this embodiment, the generation portion 323 generates the furnace heat prediction data by calculating a discrepancy degree indicative of a level of discrepancy in the second temperature data from the first temperature data, and selecting any one of the first to the third generation manners on the basis of the calculated discrepancy degree.

More specifically, in a case where the discrepancy degree fulfills a first condition (a first discrepancy condition), i.e., in a case (the first case) of determination that the third temperature data based on the first temperature data and the fourth temperature data based on the second temperature data are substantially the same, the generation portion 323 selects the first generation manner, thus the fourth temperature data based on the second temperature data is the first candidate furnace heat prediction data. Further, in this case, the generation portion 323 generates second candidate furnace heat prediction data in the second generation manner. In other words, the generation portion 323 uses a result of combination of the third temperature data and the fourth temperature data as the second candidate furnace heat prediction data.

In a case where the discrepancy degree fulfills a second condition (a second discrepancy condition), i.e., in a case (the second case) of determination that the third temperature data based on the first temperature data and the fourth temperature data based on the second temperature data have substantially the same temperature variation trend but have a large temperature fluctuation, the generation portion 323 selects the second generation manner, thus the result of combination of the third temperature data based on the first temperature data and the fourth temperature data based on the second temperature data is the first candidate furnace heat prediction data. Further, in this case, the generation portion 323 generates second candidate furnace heat prediction data in the first generation manner. In other words, the generation portion 323 uses the fourth temperature data based on the second temperature data as the second candidate furnace heat prediction data.

In a case where the discrepancy degree fulfills a third condition (a third discrepancy condition), i.e., in a case (the third case) of determination that there is a discrepancy between the third temperature data based on the first temperature data and the fourth temperature data based on the second temperature data, the generation portion 323 selects the third generation manner, thus the third temperature data based on the first temperature data, more specifically third temperature data after the lapse of the given time period is the first candidate furnace heat prediction data. Further, in this case, the generation portion 323 uses the third temperature data of the latest temperature as the second candidate furnace heat prediction data.

The discrepancy degree D is, for example, an absolute sum of respective differences between the third temperature data and the fourth temperature data in sampling times each having a predetermined duration, the differences being assigned with weights which are greater as being closer to the time of prediction. In relative to two thresholds Th1, Th2 (Th1 < Th2), D < Th1 is the first case fulfilling the first discrepancy condition, Th1 < D < Th2 is the second case fulfilling the second discrepancy condition, and D > Th2 is the third case fulfilling the third discrepancy condition. The thresholds Th1, Th2 are, for example, properly set on the basis of a plurality of samples.

In the combination, for example, the generation portion 323 combines the first temperature data and the second temperature data in accordance with a linear polynomial including the first temperature and the second temperature (a second combination manner). More specifically, for example, a third temperature TP3(k) in the third temperature data based on the first temperature data and a fourth temperature TP4(k) in the fourth temperature data based on the second temperature data at a measurement moment k are combined for each of the measurement moments in accordance with w × TP3(k) + (1 - w) × TP4(k). Thus, the combined temperature (combination temperature) TP5(k) is obtained (TP5(k) = w × TP3(k) + (1 - w) × TP4(k)). The combination ratio (weight) w is properly set in advance (0 < w < 1). Alternatively, for example, a third temperature TP3(k) in the third temperature data based on the first temperature data and a fourth temperature TP4(k) in the fourth temperature data based on the second temperature data at the measurement moment k are combined for each of the measurement moments in accordance with w × TP3(k) + (1 - w) × TP4(k) + w × ((overall average of the third temperature data TPave3) - (overall average of the fourth temperature data TPave4)). Thus, the combined temperature TP5(k) is obtained (TP5(k) = w × TP3(k) + (1 - w) × TP4(k) + w × (TPave3 - TPave4)).

Alternatively, for example, the generation portion 323 combines the first temperature data and the second temperature data by shifting the second temperature data so as to agree with the first temperature (the second combination manner). More specifically, in FIG. 3A, third temperatures in the third temperature data are represented by a reference sign "×", whereas a curve of the fourth temperature data is represented by a solid line; wherein three measurement moments selected in the third temperature data are denoted by T1, T2, T3, discrepancies in fourth temperatures TP4 in the fourth temperature data based on the second temperature data from third temperatures TP3 in the third temperature data based on the first temperature data at the three measurement moments T1, T2, T3 are respectively denoted by δ1, δ2, δ3 (in the example shown in FIG. 3A, δ1 > 0, δ2 > 0, δ3 < 0): in T1 ≤ t ≤ T2, it is obtained that TP5(t) = TP4(t) + δ1 + (δ2 - δ1) × ((t - T1) / (T2 - T1)), TP5(T1) = TP4(T1) + δ1, and TP5(T2) = TP4(T1) + δ2; in T2 ≤ t ≤ T3, it is obtained that TP5(t) = TP4(t) + δ2 + (δ3 - δ2) × ((t - T2) / (T3 - T2)), TP5(T3) = TP4(T1) + δ3; in T3 < t, it is obtained that TP5(t) = TP4(t) + δ3; and in T1 > t, it is obtained that TP5(t) = TP4(t) + δ1. Consequently, as shown in FIG. 3B, a curve of combined temperature data TP5(t) is obtained, which is represented by the solid line and shows substantially parallel shifting of the second temperature data so as to agree with the three third temperatures. In FIG. 3B, a curve of the fourth temperature data is represented by the dotted line.

As an example, in this embodiment, the furnace heat prediction data generation apparatus includes the first temperature measurement part 1, the second temperature measurement part 2, and the data generation section 32.

The prediction section 33 predicts furnace heat in a blast furnace using furnace heat prediction data generated by the data generation section 32 in the furnace heat prediction data generation apparatus. For example, a furnace heat prediction model is used for predicting furnace heat. A known model prepared in advance is used as the furnace heat prediction model. For example, Japanese Unexamined Patent Publication No. 2021-130860 and Japanese Unexamined Patent Publication No. 2018-145520 disclose such prediction models. The furnace heat model disclosed in Japanese Unexamined Patent Publication No. 2021-130860 is a model for calculating a furnace heat variation amount on the basis of the past actual data from a predetermined time to a certain past time. The furnace heat model is expressed by two parameters, i.e., a time lag and a constant multiple gain. For example, this furnace heat model is generated by calculating the parameters that minimize an objective function expressing a difference between a furnace heat variation amount in the past actual data and a furnace heat variation amount calculated using the furnace heat model on the basis of the past actual data. A prediction equation disclosed in Japanese Unexamined Patent Publication No. 2018-145520 is a regression equation of a variation amount over time in a temperature of pig iron, and expresses a relationship between a variation amount over time in an operation condition for a blast furnace and a variation amount over time in a temperature of the pig iron. This prediction equation is formed by: calculating a similarity between a variation amount over time in an actual value of each of a plurality of operation conditions in the time variation amount dataset and a variation amount over time in an operation condition for the blast furnace at a time of pig iron temperature prediction; and using the variation amount over time in the actual value of the operation condition in the time variation amount dataset and the calculated similarity.

As described above, in this embodiment, the data generation section 32 generates first candidate furnace heat prediction data and second candidate furnace heat prediction data by the generation portion 323. Thus, the prediction section 33 predicts furnace heat in a blast furnace using the first candidate furnace heat prediction data for a furnace heat model, and predicts furnace heat in the blast furnace by using the second candidate furnace heat prediction data for the furnace heat model.

Further, in this embodiment, the control processing part 3 compares a first prediction result predicted based on the first candidate furnace heat prediction data and a second prediction result predicted based on the second candidate furnace heat prediction data, and displays on the display part 5 a message for calling for attention (an alert raising message) when a result of the comparison fulfills a certain condition (an alert raising condition) specified in advance. For example, the alert raising condition means that the first prediction result and the second prediction result are different from each other in direction of predicted furnace heat variation from the current furnace heat. For example, the alert raising condition is a case that the first prediction result shows an increase compared to the furnace heat at the start time and the second prediction result shows a decrease compared to the furnace heat at the start time, and, on the contrary, a case that the first prediction result shows a decrease in the furnace heat and the second prediction result shows an increase in the furnace heat. Alternatively, for example, the alert raising condition is a case that the first prediction result and the second prediction result are different from each other in the predicted furnace heat variation from the furnace heat at the start time by a discrepancy equal to or greater than a predetermined threshold (temperature difference threshold).

The furnace heat prediction system S may further include a sound output part that outputs sound, such as a speaker and a buzzer, and may output from the sound output part a voice or a buzzer sound to call for attention in place of the alert raising message.

For example, the control processing part 3, the input part 4, the display part 5, the IF part 6, and the storage part 7 may be formed in a computer of a desktop type, a laptop type, or the like. For example, the computer forming the parts 3 to 7 may be provided in an operation room of a blast furnace SF and embedded in a console (concurrently serve as the console) of the blast furnace SF. Alternatively, the computer may be provided separately from the console.

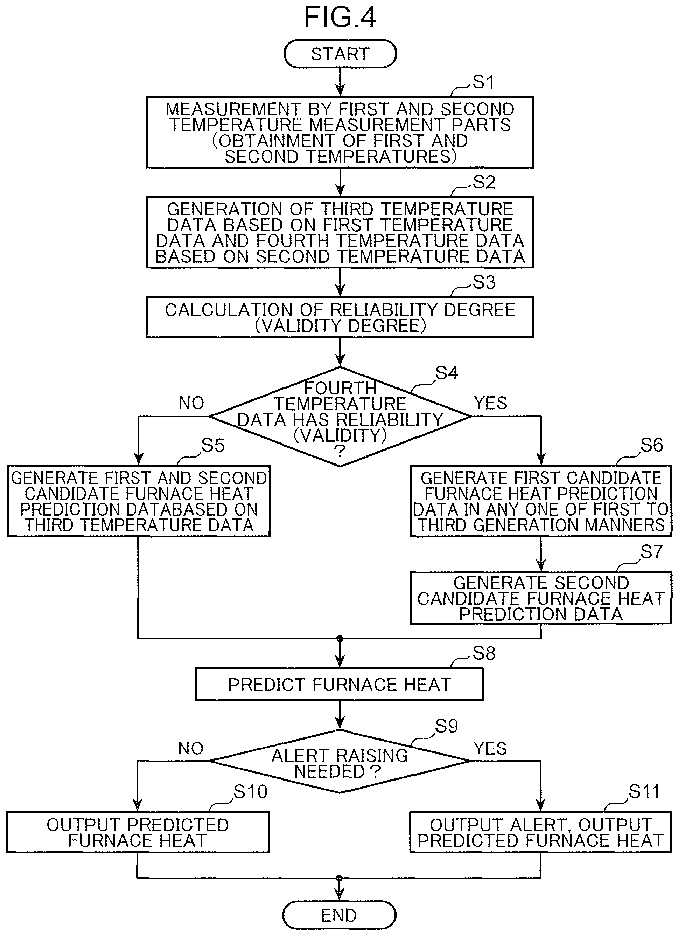

Next, an operation of this embodiment is described. FIG. 4 is a flowchart showing an operation of the furnace heat prediction system including the furnace heat prediction data generation apparatus.

The furnace heat prediction system S including the furnace heat prediction data generation apparatus having such configuration initializes necessary parts, and starts the operation when a power source thereof is turned on. Upon execution of a control processing program, the control processing part 3 functionally includes the control section 31, the data generation section 32, and the prediction section 33, and the data generation section 32 functionally includes the pre-processing portion 321, the reliability degree calculation portion 322, and the generation portion 323.

In FIG. 4, the first temperature measurement part 1 measures a temperature of pig iron at a first time interval, the furnace heat prediction system S causes the control processing part 3 to acquire from the first temperature measurement part 1 the measured temperature (the first temperature) of the pig iron, whereas the second temperature measurement part 2 measures a temperature of the pig iron at a second time interval, the furnace heat prediction system S causes the control processing part 3 to acquire from the second temperature measurement part 2 the measured temperature (the second temperature) of the pig iron (S1). The first temperature data and the second temperature data are then stored in the storage part 7.

Further, the furnace heat prediction system S causes the input part 4 to receive an input by a user (an operator) at the start time, and causes the pre-processing portion 321 of the data generation section 32 in the control processing part 3 to generate third temperature data on the basis of the first temperature data, and fourth temperature data on the basis of the second temperature data (S2).

Further, the furnace heat prediction system S causes the reliability degree calculation portion 322 of the data generation section 32 in the control processing part 3 to calculate a reliability degree, i.e., a validity degree in this embodiment (S3).

Further, the furnace heat prediction system S causes the generation portion 323 of the data generation section 32 in the control processing part 3 to determine a reliability (validity) of the fourth temperature data based on the second temperature data by comparing the validity degree calculated in Step S3 with the validity determination threshold (S4). In the determination, when the fourth temperature data is determined to have no validity (No) because its validity degree is lower than the validity determination threshold, the furnace heat prediction system S performs a processing in Step S5. On the other hand, when the fourth temperature data is determined to have the validity (Yes) because its validity degree is equal to or greater than the validity determination threshold, the furnace heat prediction system S performs a processing in Step S6.

In Step S5, the furnace heat prediction system S causes the generation portion 323 to generate first candidate furnace heat prediction data and second candidate furnace heat prediction data in such a manner that third temperature data after the lapse of a given time period is the first candidate furnace heat prediction data and the third temperature data of the latest temperature is the second candidate furnace heat prediction data. The furnace heat prediction system S executes a processing in Step S8 after the execution of the processing in Step S5.

In Step S6, the furnace heat prediction system S causes the generation portion 323 to calculate a discrepancy degree and selects any one of the first to the third generation manners on the basis of the calculated discrepancy degree to thereby generate the first candidate furnace heat prediction data. The furnace heat prediction system S executes a processing in Step S7 after the execution of the processing in Step S6.

In Step S7, the furnace heat prediction system S causes the generation portion 323 to generate second candidate furnace heat prediction data corresponding to a generation manner selected in Step S6. The furnace heat prediction system S executes the processing in Step S8 after the execution of the processing in Step S7.

In Step S8, the furnace heat prediction system S causes the prediction section 33 in the control processing part 3 to predict furnace heat in the blast furnace using the first candidate furnace heat prediction data for the furnace heat model and predict furnace heat in the blast furnace using the second candidate furnace heat prediction data for the furnace heat model.

Further, the furnace heat prediction system S causes the control processing part 3 to determine the necessity for raising an alert on the basis of: a result of comparison between the first prediction result predicted based on the first candidate furnace heat prediction data and the second prediction result predicted based on the second candidate furnace heat prediction data; and the alert raising condition (S9). When, in the determination, the result of the comparison does not fulfill the alert raising condition (No), the furnace heat prediction system S causes the control section 31 in the control processing part 3 to display on the display part 5 and output the first prediction result and the second prediction result (S10), and ends this process. On the other hand, when, in the determination, the result of the comparison fulfills the alert raising condition (Yes), the furnace heat prediction system S causes the control section 31 to display on the display part 5 and output the alert raising message and to display on the display part 5 and output the first prediction result and the second prediction result (S11), and ends this process. Alternatively, the first prediction result and the second prediction result may be output to an external device via the IF part 6, if necessary.

As described above, in this embodiment, the furnace heat prediction data generation apparatus provided in the furnace heat prediction system S includes, in addition to the first temperature measurement part 1 that measures at the first time interval, the second temperature measurement part 2 that measures at the second time interval shorter than the first time interval, and generates furnace heat prediction data from temperature data of pig iron on the basis of first temperature data from the first temperature measurement part 1 and second temperature data from the second temperature measurement part 2. Thus, the furnace heat prediction data generation apparatus can generate furnace heat prediction data that enables a more accurate prediction of furnace heat. For example, a non-contact type thermometer such as a radiation thermometer can measure a temperature at a shorter time interval than a contact-type thermometer such as an immersion-type thermocouple thermometer. However, in a blast furnace, which is a measurement environment not suitable for a non-contact type thermometer, the measurement is liable to involve a significant measurement error. An accurate prediction of furnace heat is hardly achievable when the second temperature data from the second temperature measurement part 2 is the furnace heat prediction data. The furnace heat prediction data generation apparatus generates the furnace heat prediction data from temperature data of the pig iron on the basis of the first temperature data from the first temperature measurement part 1 as well as the second temperature data from the second temperature measurement part 2. Thus, the furnace heat prediction data generation apparatus can generate furnace heat prediction data that enables a more accurate prediction of furnace heat.

A furnace heat prediction data generation method for the furnace heat prediction system S including the furnace heat prediction data generation apparatus includes, in addition to a first temperature measurement step of measuring at the first time interval, a second temperature measurement step of measuring at the second time interval shorter than the first time interval, and generates the furnace heat prediction data from temperature data of pig iron on the basis of the first temperature data resulting from the first temperature measurement step and the second temperature data resulting from the second temperature measurement step. Thus, the furnace heat prediction data generation method can generate furnace heat prediction data that enables a more accurate prediction of furnace heat. In the furnace heat prediction data generation method, the furnace heat prediction data is generated from temperature data of the pig iron on the basis of the first temperature data resulting from the first temperature measurement step as well as the second temperature data resulting from the second temperature measurement step. Thus, the furnace heat prediction data generation method can generate furnace heat prediction data that enables a more accurate prediction of the furnace heat.

In this embodiment, a furnace heat prediction system S including a furnace heat prediction data generation apparatus and a furnace heat prediction data generation method that generate furnace heat prediction data in any one of the first to the third generation manners can be provided.

As described above, in a blast furnace, which is a measurement environment not suitable for a non-contact type thermometer, the measurement is liable to involve a significant measurement error. The furnace heat prediction data generation apparatus and the furnace heat prediction data generation method generate furnace heat prediction data in such a manner that: when the reliability degree is low, the first temperature data is the furnace heat prediction data; and when the reliability degree is high, any one of the first to the third generation manners is selected. Thus, the furnace heat prediction data generation apparatus and the furnace heat prediction data generation method can generate furnace heat prediction data highly reliable.

In this embodiment, a furnace heat prediction system S including a furnace heat prediction data generation apparatus and a furnace heat prediction data generation method that combine the first temperature data and the second temperature data in accordance with a linear polynomial including the first temperature and the second temperature can be provided.

In this embodiment, a furnace heat prediction system S including a furnace heat prediction data generation apparatus and a furnace heat prediction data generation method that combine the first temperature data and the second temperature data by shifting the second temperature data so as to agree with the first temperature can be provided.

When furnace heat in a blast furnace is predicted, a first prediction result with the first candidate furnace heat prediction data and a second prediction result with the second candidate furnace heat prediction data show the substantially same or similar trend (an upward trend with an increase in furnace heat from a start time such as the current time to a time of prediction or a downward trend with a decrease in the furnace heat). Since the furnace heat prediction data generation apparatus and the furnace heat prediction data generation method generate the first candidate furnace heat prediction data and the second candidate furnace heat prediction data, in the prediction of furnace heat in a blast furnace, a first prediction result and a second prediction result can be compared to study the reliability of the prediction result.

In this embodiment, a furnace heat prediction system S including the furnace heat prediction data generation apparatus and a furnace heat prediction method including the furnace heat prediction data generation method can be provided. Since the furnace heat prediction system and the furnace heat prediction method can generate furnace heat prediction data that enables a more accurate prediction of furnace heat, the furnace heat can be predicted at a higher accuracy. Upon review of a furnace heat prediction result, operation conditions such as temperature, humidity, and amount of blown air, an injection amount of pulverized coal, and a coke ratio can be manipulated (changed, regulated, controlled), if necessary. Thus, the pig iron temperature in the blast furnace can be controlled within a certain range set in advance. Consequently, the quality of the pig iron can be maintained.

The present specification has disclosed technologies having various aspects as described above, and main technologies are summarized hereinafter.

A furnace heat prediction data generation apparatus according to an aspect generates furnace heat prediction data used for prediction of furnace heat in a blast furnace, and includes a first temperature measurement part that measures a temperature of pig iron tapped from a tap hole of the blast furnace in contact with the pig iron at a first time interval, a second temperature measurement part that measures a temperature of the pig iron in non-contact with the pig iron at a second time interval shorter than the first time interval, and a data generation part that generates furnace heat prediction data from temperature data of the pig iron on the basis of first temperature data time-serially including a plurality of first temperatures measured by the first temperature measurement part at the first time interval and second temperature data time-serially including a plurality of second temperatures measured by the second temperature measurement part at the second time interval. Preferably, in the furnace heat prediction data generation apparatus, the first temperature measurement part may include an immersion-type thermocouple thermometer. Preferably, in the furnace heat prediction data generation apparatus, the second temperature measurement part may include a radiation thermometer.

The furnace heat prediction data generation apparatus includes, in addition to the first temperature measurement part that measures at the first time interval, the second temperature measurement part that measures at the second time interval shorter than the first time interval, and generates furnace heat prediction data from temperature data of pig iron on the basis of the first temperature data from the first temperature measurement part and the second temperature data from the second temperature measurement part. Thus, the furnace heat prediction data generation apparatus can generate furnace heat prediction data that enables a more accurate prediction of furnace heat. For example, a non-contact type thermometer such as a radiation thermometer, which causes an imaging element to measure a radiance of pig iron and converts the radiance into a temperature, can measure a temperature at a shorter time interval than a contact-type thermometer such as an immersion-type thermocouple thermometer. However, in a blast furnace, which is a measurement environment not suitable for a non-contact type thermometer, the measurement is liable to involve a significant measurement error. An accurate prediction of furnace heat is hardly achievable when the second temperature data from the second temperature measurement part is the furnace heat prediction data. The furnace heat prediction data generation apparatus generates the furnace heat prediction data from temperature data of the pig iron on the basis of the first temperature data from the first temperature measurement part as well as the second temperature data from the second temperature measurement part. Thus, the furnace heat prediction data generation apparatus can generate furnace heat prediction data that enables a more accurate prediction of furnace heat.

According to another aspect, in the furnace heat prediction data generation apparatus mentioned above, the data generation part may generate the furnace heat prediction data in any one of: a first generation manner in which the second temperature data is the furnace heat prediction data; a second generation manner in which a result of combination of the first temperature data and the second temperature data is the furnace heat prediction data; and a third generation manner in which the first temperature data is the furnace heat prediction data. Preferably, in the furnace heat prediction data generation apparatus described above, the data generation part may calculate a discrepancy degree indicative of a level of discrepancy in the second temperature data from the first temperature data, and selects any one of the first to the third generation manners on the basis of the calculated discrepancy degree to thereby generate the furnace heat prediction data.

Thus, the furnace heat prediction data generation apparatus that generates the furnace heat prediction data in any one of the first to the third generation manners can be provided.

According to still another aspect, in the furnace heat prediction data generation apparatus described above, the data generation part may include: a reliability degree calculation section that calculates a reliability degree indicative of a level of reliability of the second temperature data; and a generation section that generates the furnace heat prediction data in such a manner that: when the reliability degree calculated by the reliability degree calculation section is lower than a predetermined threshold, the first temperature data is the furnace heat prediction data; and when the reliability degree calculated by the reliability degree calculation section is higher than the threshold, any one of the first to the third generation manners is selected. Preferably, in the furnace heat prediction data generation apparatus mentioned above, the reliability degree calculation section may calculate a validity degree indicative of a level of validity of the second temperature measured by the second temperature measurement part as the reliability degree.

As described above, in a blast furnace, which is a measurement environment not suitable for a non-contact type thermometer, the measurement is liable to involve a significant measurement error. The furnace heat prediction data generation apparatus generates the furnace heat prediction data in such a manner that: when the reliability degree is low, the first temperature data is the furnace heat prediction data; and when the reliability degree is high, any one of the first to the third generation manners is selected. Thus, the furnace heat prediction data generation apparatus can generate furnace heat prediction data highly reliable.

According to still another aspect, in the furnace heat prediction data generation apparatus mentioned above, the data generation part may combine the first temperature data and the second temperature data in accordance with a linear polynomial including the first temperature and the second temperature.

Thus, the furnace heat prediction data generation apparatus that combines the first temperature data and the second temperature data in accordance with a linear polynomial including the first temperature and the second temperature can be provided.

According to still another aspect, in the furnace heat prediction data generation apparatus mentioned above, the data generation part may combine the first temperature data and the second temperature data by shifting the second temperature data so as to agree with the first temperature.

Thus, the furnace heat prediction data generation apparatus that combines the first temperature data and the second temperature data by shifting the second temperature data so as to agree with the first temperature can be provided.

According to still another aspect, in the furnace heat prediction data generation apparatus mentioned above, the data generation part may generate first candidate furnace heat prediction data that is furnace heat prediction data generated in any one of the first to the third generation manners, and further generates second candidate furnace heat prediction data on the basis of the first temperature data and the second temperature data. Preferably, in the furnace heat prediction data generation apparatus mentioned above, when the first candidate furnace heat prediction data is generated in the first generation manner, the data generation part may generate second candidate furnace heat prediction data in the second generation manner. Preferably, in the furnace heat prediction data generation apparatus mentioned above, when the first candidate furnace heat prediction data is generated in the second generation manner, the data generation part may generate second candidate furnace heat prediction data in the first generation manner. Preferably, in the furnace heat prediction data generation apparatus mentioned above, when generating first candidate furnace heat prediction data in the third generation manner, the data generation part may determine first temperature data after the lapse of a given time period from a start of the tapping to be the first candidate furnace heat prediction data, and determine the latest first temperature in the first temperature data to be the second candidate furnace heat prediction data.

When furnace heat in a blast furnace is predicted, a first prediction result by the first candidate furnace heat prediction data and a second prediction result by the second candidate furnace heat prediction data show the substantially same or similar trend (an upward trend with an increase in furnace heat from a start time such as the current time to a time of prediction or a downward trend with a decrease in the furnace heat). Since the furnace heat prediction data generation apparatus generates the first candidate furnace heat prediction data and the second candidate furnace heat prediction data, in the prediction of furnace heat in a blast furnace, a first prediction result and a second prediction result can be compared to evaluate the reliability of the prediction result.

A furnace heat prediction data generation method according to another aspect generates furnace heat prediction data used to predict furnace heat in a blast furnace, and may include: a first temperature measurement step of measuring a temperature of pig iron tapped from a tap hole of the blast furnace in contact with the pig iron at a first time interval; a second temperature measurement step of measuring a temperature of the pig iron in non-contact with the pig iron at a second time interval shorter than the first time interval; and a generation step of generating furnace heat prediction data from temperature data of the pig iron on the basis of first temperature data time-serially including a plurality of first temperatures measured at the first time interval in the first temperature measurement step and second temperature data time-serially including a plurality of second temperatures measured at the second time interval in the second temperature measurement step.

The furnace heat prediction data generation method produces the same advantageous effect as the furnace heat prediction data generation apparatus.

A furnace heat prediction system according to still another aspect may include: one of the furnace heat prediction data generation apparatus described above; and a prediction part that predicts furnace heat in the blast furnace using the furnace heat prediction data generated by the furnace heat prediction data generation apparatus.

A furnace heat prediction method according to still another aspect may include the furnace heat prediction data generation method and a furnace heat prediction step of predicting furnace heat in the blast furnace using the furnace heat prediction data generated by the furnace heat prediction data generation method.

Accordingly, the furnace heat prediction system including the furnace heat prediction data generation apparatus and the furnace heat prediction method including the furnace heat prediction data generation method can be provided. Since the furnace heat prediction system and the furnace heat prediction method can generate furnace heat prediction data for a more accurate prediction of the furnace heat, the furnace heat can be predicted at a higher accuracy.

This application is based on Japanese Patent application No. 2023-31856 filed with Japan Patent Office on March 2nd, 2023, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

### Industrial Applicability

The present invention can provide a furnace heat prediction data generation apparatus for generating furnace heat prediction data used to predict furnace heat in a blast furnace and a method for generating the furnace heat prediction data, and a furnace heat prediction system including the apparatus and a furnace heat prediction method including the method.

## Claims

1. A furnace heat prediction data generation apparatus for generating furnace heat prediction data used to predict furnace heat in a blast furnace, comprising:
a first temperature measurement part that measures a temperature of pig iron tapped from a tap hole of the blast furnace in contact with the pig iron at a first time interval;
a second temperature measurement part that measures a temperature of the pig iron in non-contact with the pig iron at a second time interval shorter than the first time interval; and
a data generation part that generates furnace heat prediction data from temperature data of the pig iron on the basis of first temperature data time-serially including a plurality of first temperatures measured by the first temperature measurement part at the first time interval and second temperature data time-serially including a plurality of second temperatures measured by the second temperature measurement part at the second time interval.

2. The furnace heat prediction data generation apparatus according to claim 1, wherein
the data generation part generates the furnace heat prediction data in any one of:
a first generation manner in which the second temperature data is the furnace heat prediction data;
a second generation manner in which a result of combination of the first temperature data and the second temperature data is the furnace heat prediction data; and
a third generation manner in which the first temperature data is the furnace heat prediction data.

3. The furnace heat prediction data generation apparatus according to claim 2, wherein
the data generation part includes:
a reliability degree calculation section that calculates a reliability degree indicative of a level of reliability of the second temperature data; and
a generation section that generates the furnace heat prediction data in such a manner that:
when the reliability degree calculated by the reliability degree calculation section is lower than a predetermined threshold, the first temperature data is the furnace heat prediction data; and
when the reliability degree calculated by the reliability degree calculation section is higher than the threshold, any one of the first to the third generation manners is selected.

4. The furnace heat prediction data generation apparatus according to claim 2, wherein
the data generation part combines the first temperature data and the second temperature data in accordance with a linear polynomial including the first temperature and the second temperature.

5. The furnace heat prediction data generation apparatus according to claim 2, wherein
the data generation part combines the first temperature data and the second temperature data by shifting the second temperature data so as to agree with the first temperature.

6. The furnace heat prediction data generation apparatus according to claim 2, wherein
the data generation part generates first candidate furnace heat prediction data that is furnace heat prediction data generated in any one of the first to the third generation manners, and further generates second candidate furnace heat prediction data on the basis of the first temperature data and the second temperature data.

7. A furnace heat prediction data generation method for generating furnace heat prediction data used to predict furnace heat in a blast furnace, comprising:
a first temperature measurement step of measuring a temperature of pig iron tapped from a tap hole of the blast furnace in contact with the pig iron at a first time interval;
a second temperature measurement step of measuring a temperature of the pig iron in non-contact with the pig iron at a second time interval shorter than the first time interval; and
a data generation step of generating furnace heat prediction data from temperature data of the pig iron on the basis of first temperature data time-serially including a plurality of first temperatures measured at the first time interval in the first temperature measurement step and second temperature data time-serially including a plurality of second temperatures measured at the second time interval in the second temperature measurement step.

8. A furnace heat prediction system, comprising:
a furnace heat prediction data generation apparatus according to any one of claim 1 to claim 6; and
a prediction part that predicts furnace heat in the blast furnace using the furnace heat prediction data generated by the furnace heat prediction data generation apparatus.

9. A furnace heat prediction method, comprising:
the furnace heat prediction data generation method according to claim 7, and
a furnace heat prediction step of predicting furnace heat in the blast furnace using the furnace heat prediction data generated by the furnace heat prediction data generation method.
